# EUROPÄISCHE PATENTSCHRIFT

(11) **EP 1 299 502 B1**
(45) Veröffentlichungstag und Bekanntmachung des Hinweises auf die Patenterteilung: **12.09.2012**
(21) Anmeldenummer: 01945334.9
(22) Anmeldetag: 03.07.2001
(51) Int. Cl.: C10B 49/16

(54) **VERFAHREN UND VORRICHTUNG ZUR PYROLYSE UND VERGASUNG VON STOFFGEMISCHEN, DIE ORGANISCHE BESTANDTEILE ENTHALTEN**
METHOD AND DEVICE FOR PYROLYSIS AND GASIFICATION OF SUBSTANCE MIXTURES CONTAINING ORGANIC CONSTITUENTS
PROCEDE ET DISPOSITIF POUR PYROLYSER ET GAZEIFIER DES MELANGES DE MATIERES CONTENANT DES CONSTITUANTS ORGANIQUES

(30) Priorität: 10.07.2000 DE 10033453
(43) Veröffentlichungstag der Anmeldung: 09.04.2003
(73) Patentinhaber: Kalinowski-Krumm, Ursula, 57482 Wenden (DE)
(72) Erfinder: KRUMM, Wolfgang, 57482 Wenden (DE); FUNK, Günter, 57076 Siegen (DE); HAMEL, Stefan, 57482 Wenden (DE); MERTENS, Christian, 35619 Braunfels (DE)
(74) Vertreter: Zinnecker, Armin
(86) Internationale Anmeldenummer: PCT/EP2001/007607
(87) Internationale Veröffentlichungsnummer: WO 2002/004574

(56) Entgegenhaltungen:
- WO-A-01/21730
- DE-C- 19 755 693

## Beschreibung

Die Erfindung betrifft ein Verfahren zur Pyrolyse und Vergasung von Stoffgemischen, die organische Bestandteile enthalten, und eine Vorrichtung zur Durchführung eines derartigen Verfahrens.

Bei diesen Stoffgemischen kann es sich insbesondere um Hausmüll oder hausmüllähnliche Abfälle handeln sowie um Produkte, die aus Hausmüll oder hausmüllähnlichen Abfällen gewonnen worden sind.

Verfahren und Vorrichtungen zur Pyrolyse und Vergasung von organischen Stoffen sind bereits bekannt. Die DE-PS 197 55 693 offenbart ein Verfahren zur Vergasung von organischen Stoffen, bei dem die organischen Stoffe in einen Pyrolysereaktor geleitet werden, in welchem sie mit einem Wärmeträgermedium in Kontakt gehalten werden, wodurch eine Pyrolyse stattfindet. Der Pyrolysereaktor ist ein Wanderbettreaktor oder eine Drehtrommel. Die Pyrolyseprodukte bestehen aus Pyrolysegasen mit kondensierbaren Stoffen und einem festen kohlenstoffhaltigen Rückstand. Der feste kohlenstoffhaltige Rückstand und das Wärmeträgermedium werden einer Feuerung zugeführt, in der der kohlenstoffhaltige Rückstand verbrannt und das Wärmeträgermedium aufgeheizt und wieder dem Pyrolysereaktor zugeführt wird. Die teerhaltigen Pyrolysegase werden in einer zweiten Reaktionszone derart nacherhitzt, daß ein gereinigtes Synthesegas mit hohem Heizwert erhalten wird. Dies geschieht in der Weise, daß die teerhaltigen Pyrolysegase in einen indirekten Wärmetauscher geleitet werden, in dem sie mit einem Reaktionsmittel, beispielsweise Wasserdampf, reagieren. Die Feuerungsabgase werden derart durch den indirekten Wärmetauscher geleitet, daß deren Wärmeinhalt für die Reaktion der Pyrolysegase mit dem Reaktionsmittel genutzt wird. Die aus der Feuerung abgezogene Asche der festen kohlenstoffhaltigen Rückstände und das Wärmeträgermedium werden am Eintragsende für den organischen Stoff in den Pyrolysereaktor zurückgeführt.

Die prioritätsältere, nicht vorveröffentlichte deutsche Patentanmeldung 199 30 071.2 betrifft ein Verfahren und eine Vorrichtung zur Pyrolyse und Vergasung von organischen Stoffen, bei dem die organischen Stoffe in einen Trocknungs- und Pyrolysereaktor eingebracht werden, in dem sie mit dem Wirbelbettmaterial einer Verbrennungswirbelschicht in Kontakt gebracht werden, wodurch eine Trocknung und Pyrolyse stattfindet, bei der die organischen Stoffe in Wasserdampf aus der Trocknung und Pyrolyseprodukte umgesetzt werden. Die Pyrolyseprodukte bestehen aus Gasen mit kondensierbaren Substanzen und festem kohlenstoffhaltigen Rückstand. Der feste kohlenstoffhaltige Rückstand, gegebenenfalls mit Anteilen des Wasserdampfs und der Pyrolysegase mit kondensierbaren Substanzen, und das Wirbelbettmaterial werden zurück in die Verbrennungswirbelschicht geführt, in der der kohlenstoffhaltige Rückstand der organischen Stoffe verbrannt, das Wirbelbettmaterial aufgeheizt und wieder in den Pyrolysereaktor geführt wird. Der Wasserdampf aus der Trocknung und die Pyrolysegase mit kondensierbaren Substanzen werden in einer weiteren Reaktionszone derart nachbehandelt, daß ein Produktgas mit hohem Heizwert entsteht. Die Verbrennungswirbelschicht, in der die Pyrolyserückstände verbrannt werden, wird als stationäre Wirbelschicht betrieben. Die Pyrolysegase werden in einen indirekten Wärmetauscher geleitet, in dem sie gegebenenfalls mit einem Reaktionsmittel wie Wasserdampf, Sauerstoff oder Luft oder einer Mischung daraus reagieren. Die Feuerungsabgase werden derart mit dem indirekten Wärmetauscher in Kontakt gebracht, daß deren Wärmeinhalt für die Reaktion der Pyrolysegase mit dem Reaktionsmittel genutzt wird.

Bei dem vorbekannten Verfahren nach der DE-PS 197 55 693 und auch bei dem Verfahren nach der prioritätsälteren deutschen Patentanmeldung 199 30 071.2 wird jeweils ein indirekter Wärmetauscher verwendet, dem die Wärme der Feuerungsabgase zugeführt wird und durch den die Pyrolysegase geleitet werden. Diese Verfahrensweise und die zur Durchführung eines derartigen Verfahrens erforderliche Vorrichtung sind allerdings mit Nachteilen behaftet.

Aus der prioritätsälteren, nicht vorveröffentlichten WO-A-0 121 730 und der zugehörigen, ebenfalls prioritätsälteren, nicht vorveröffentlichten DE-C-197 55 693 ist ein Verfahren zur Pyrolyse von Stoffgemischen, die organische Bestandteile enthalten, bekannt, bei dem die organischen Stoffe in einem Pyrolysereaktor mit einem Wärmeträgermedium in Kontakt gebracht und pyrolisiert werden, bei dem der durch die Pyrolyse entstehende Pyrolysekoks in einem Verbrennungsreaktor unter Luftzufuhr verbrannt wird und bei dem das durch die Pyrolyse erzeugte Rohgas in einem Crackreaktor gereinigt wird.

Aufgabe der Erfindung ist es, ein verbessertes Verfahren zur Pyrolyse und Vergasung von Stoffgemischen, die organische Bestandteile enthalten, und eine verbesserte Vorrichtung zur Durchführung eines derartigen Verfahrens vorzuschlagen.

Diese Aufgabe wird durch ein Verfahren mit den Merkmalen des Anspruchs 1 und durch ein Verfahren mit den Merkmalen des Anspruchs 2 gelöst. Sie wird ferner durch eine erfindungsgemäße Vorrichtung mit den Merkmalen des Anspruchs 27 und durch eine erfindungsgemäße Vorrichtung mit den Merkmalen des Anspruchs 28 gelöst. Vorteilhafte Weiterbildungen der erfindungsgemäßen Verfahren und der erfindungsgemäßen Vorrichtungen sind in den Unteransprüchen beschrieben.

Bei dem erfindungsgemäßen Verfahren werden die organischen Stoffe beziehungsweise das Stoffgemisch, das organische Bestandteile enthält, in einem Pyrolysereaktor mit einem Wärmeträgermedium aus einem Verbrennungsreaktor in Kontakt gebracht und pyrolysiert. Bei dem Pyrolysereaktor handelt es sich vorzugsweise um einen Schachtreaktor. Als Verbrennungsreaktor wird vorzugsweise ein Wirbelschichtreaktor verwendet. Das Wärmeträgermedium wird vorzugsweise durch die Asche aus dem Verbrennungsreaktor gebildet. Es ist aber auch möglich, ein sonstiges Wärmeträgermaterial bzw. Wirbelbettmaterial zu verwenden. Der Wärmeträger bzw. das Wirbelbettmaterial kann Asche aus dem Verbrennungsreaktor enthalten oder ausschließlich oder praktisch ausschließlich aus dieser Asche bestehen. Vorteilhaft ist es, wenn die organischen Stoffe mit dem Wärmeträgermedium dadurch in Kontakt gebracht werden, daß sie miteinander vermischt werden. Die organischen Stoffe und das Wärmeträgermedium werden in dem Pyrolysereaktor in Kontakt gebracht bzw. vermischt und getrocknet und pyrolysiert. Der durch die Pyrolyse entstehende Pyrolysekoks wird in dem Verbrennungsreaktor bzw. Wirbelschichtreaktor unter Luftzufuhr verbrannt.

Gemäß der Erfindung wird das durch die Pyrolyse erzeugte Rohgas in einem Crackreaktor gereinigt. Vorzugsweise erfolgt diese Reinigung durch einen Katalysator, der im Crackreaktor vorgesehen ist. Diese Reinigung bzw. katalytische Reinigung erfolgt vorzugsweise unter Zugabe von Wasserdampf.

Bei dem erfindungsgemäßen Verfahren ist ein Wärmeübertrager bzw. Wärmetauscher, dem die Wärme der Feuerungsabgase aus dem Verbrennungsreaktor zugeführt wird und in den die Pyrolysegase geleitet werden, nicht mehr erforderlich.

Das erfindungsgemäße Verfahren eignet sich insbesondere für die Pyrolyse und Vergasung eines Stoffgemischs, das aus Hausmüll oder hausmüllähnlichen Abfällen erhalten worden ist. Dabei handelt es sich vorzugsweise um ein Stoffgemisch, das aus Hausmüll oder hausmüllähnlichen Abfällen nach folgendem Verfahren hergestellt worden ist: Der Hausmüll bzw. die hausmüllähnlichen Abfälle werden erforderlichenfalls zunächst vorbehandelt, insbesondere zerkleinert. Anschließend werden sie in geschlossenen Behältern unter Zwangsbelüftung kompostiert, wobei die organischen Bestandteile abgebaut werden. Nach einer bestimmten Zeit von beispielsweise sieben Tagen ― nach dieser Zeit sind die biologisch leichter zersetzbaren Bestandteile typischerweise ganz oder zu einem wesentlichen Teil abgebaut ― wird die Kompostierung durch Trocknung zum Stillstand gebracht. Das Material wird auf eine Restfeuchte von höchstens 15 % getrocknet. Es kann dann erforderlichenfalls noch nachbehandelt werden. Ein derartiges Material wird unter dem Namen Trockenstabilat ^{®} in Verkehr gebracht.

Vorzugsweise wird der Pyrolysekoks aus dem Pyrolysereaktor als Katalysator für das Rohgas verwendet. Hierdurch wird die katalytische Wirkung des Pyrolysekokses genutzt. Als Katalysator für das Rohgas kann der Pyrolysekoks allein oder mit einem oder mehreren weiteren Katalysatoren verwendet werden.

Eine weitere vorteilhafte Weiterbildung ist dadurch gekennzeichnet, daß aus den organischen Stoffen vor der Pyrolyse eine Feinfraktion abgesiebt wird. Die Feinfraktion kann auch auf andere Weise abgetrennt werden. Vorzugsweise wird die abgesiebte oder anderweitig abgetrennte Feinfraktion dem Verbrennungsreaktor zugeführt. Die Absiebung bzw. sonstige Abtrennung und/oder die Zuführung der Feinfraktion zum Verbrennungsreaktor sind insbesondere bei der Verarbeitung von Trockenstabilat ^{®} von Vorteil. Da der Feinanteil des Trockenstabilats ^{®} einen erhöhten Anteil an Inertien (Asche) und Schadstoffen enthält, wird dieser vorzugsweise abgesiebt bzw. anderweitig abgetrennt. Er wird ferner vorzugsweise direkt zur weiteren Behandlung dem Wirbelschichtreaktor zugeführt. Damit kann der Vorteil erreicht werden, daß die Schadstoffracht des Inputmaterials (Trockenstabilat ^{®}) über den Wirbelschichtreaktor direkt - also ohne den Umweg durch den Schachtreaktor und den Crackreaktor ― zur Rauchgasreinigung geführt wird. Die Rauchgasreinigung wird nach den gültigen Umweltschutzvorschriften ausgeführt, in Deutschland zur Zeit nach der 17. Bundesimmissionsschutzverordnung (BImSchV). Sie verhindert, daß die Schadstofffracht in die Umwelt gelangt. Ein weiterer Vorteil besteht darin, daß sich der Heizwert der Grobfraktion gegenüber dem ursprünglichen Material erhöht, da der Feinanteil des Trockenstabilats ^{®} einen erhöhten Anteil an Inertien (Asche) enthält.

Durch die Reinigung bzw. katalytische Reinigung des Rohgases kann ein Synthesegas ("Brenngas") erzeugt werden. Das Synthesegas wird vorzugsweise in einer Gasturbine oder in einer sonstigen Wärmekraftmaschine energetisch verwertet. Vorteilhaft ist es, wenn das Abgas aus der energetischen Verwertung bzw. der Gasturbine bzw. der sonstigen Wärmekraftmaschine dem Verbrennungsreaktor bzw. Wirbelschichtreaktor zugeführt wird. Dem Verbrennungsreaktor bzw. Wirbelschichtreaktor kann zusätzlich zu diesem Abgas noch Luft zugeführt werden. Es ist aber auch möglich, den Verbrennungsreaktor bzw. Wirbelschichtreaktor nicht mit Luft, sondern ausschließlich mit dem Abgas der Gasturbine oder der sonstigen Wärmekraftmaschine zu betreiben. Dies ist möglich, da das Abgas der Gasturbine bzw. sonstigen Wärmekraftmaschine immer noch einen ausreichenden Sauerstoffgehalt hat, der bei etwa 17 % liegen kann. Hierdurch ist eine besonders gute energetische Verwertung möglich.

Nach einer weiteren vorteilhaften Weiterbildung wird das Synthesegas zunächst gekühlt und/oder gereinigt, bevor es für die Brennkammer der Gasturbine oder sonstigen Wärmekraftmaschine verwendet wird. Die Kühlung und/oder Reinigung erfolgt vorzugsweise in einer Quenche. Vorzugsweise wird das Abwasser aus der Kühlung und/oder Reinigung eingedampft, vorzugsweise in einem Trockner. Der Rest aus der Eindampfung (der "eingedickte" Rest) wird vorzugsweise dem Verbrennungsreaktor zugeführt.

Eine weitere vorteilhafte Weiterbildung ist dadurch gekennzeichnet, daß durch die Reinigung bzw. katalytische Reinigung des Rohgases ein Synthesegas erzeugt wird. Vorzugsweise wird aus dem Synthesegas Wasserstoff abgetrennt. Das bei der Wasserstoffabtrennung verbleibende Schwachgas wird vorzugsweise dem Verbrennungsreaktor zugeführt. Es kann dort thermisch genutzt werden.

Vorteilhaft ist es, wenn der Verbrennungsreaktor bzw. Wirbelschichtreaktor zweistufig betrieben wird. Dies geschieht insbesondere dadurch, daß am unteren Ende des Verbrennungsreaktors bzw. Wirbelschichtreaktors weniger Luft zugegeben wird als für eine stöchiometrische Verbrennung benötigt wird. Dadurch enthält die Asche, die dem Pyrolysereaktor bzw. Schachtreaktor zugeführt wird, noch Koks, der damit bereits im oberen Teil des Pyrolysereaktors (Schachtreaktors, Entgasers) katalytische Wirkung hat. Oberhalb der Ausförderung der Asche aus dem Verbrennungsreaktor bzw. Wirbelschichtreaktor wird weitere Luft zugegeben, um eine vollständige Verbrennung zu erreichen und das Abgas ― gereinigt ― in die Umgebung abgeben zu können.

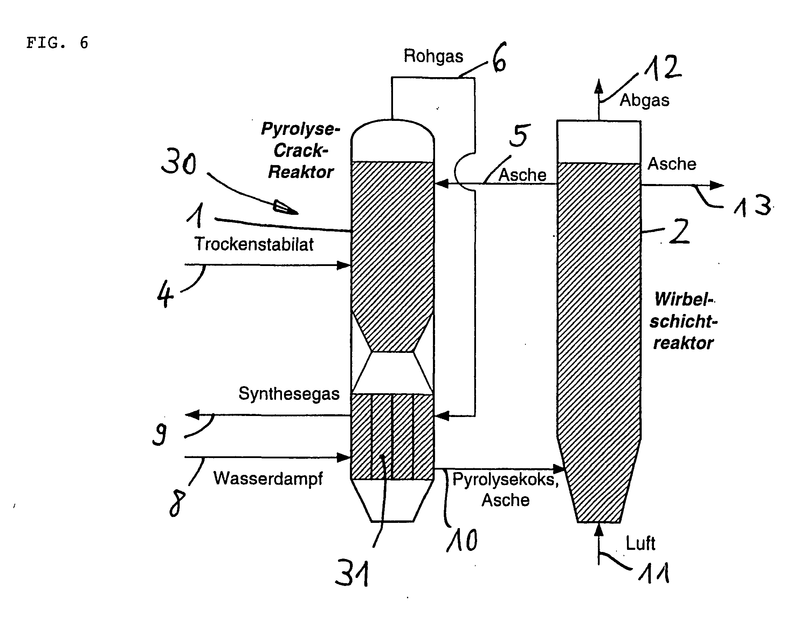

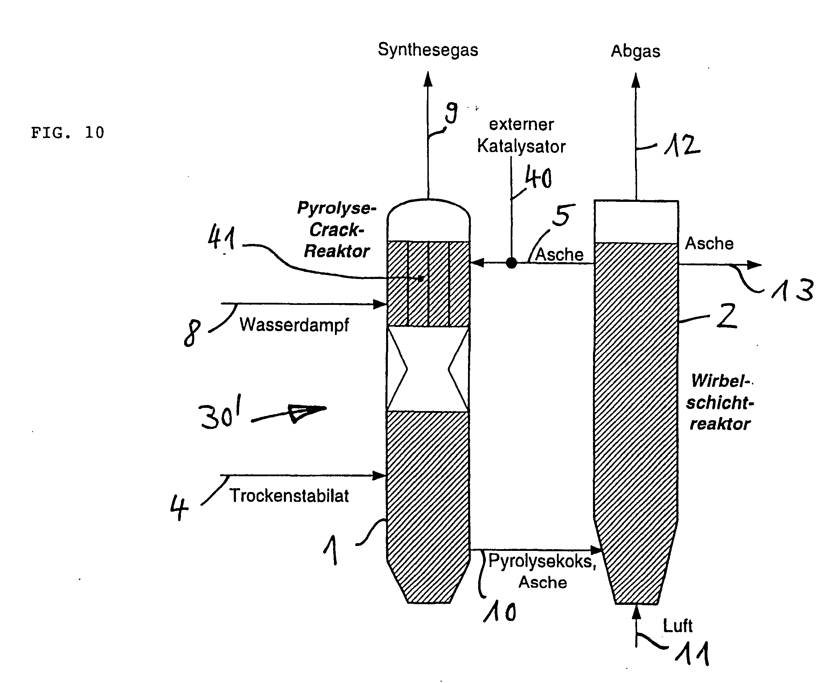

Eine weitere vorteilhafte Weiterbildung ist dadurch gekennzeichnet, daß eine Zone des Pyrolysereaktors bzw. Schachtreaktors als Crackreaktor verwendet wird. Dies kann in der Weise geschehen, daß der Pyrolysereaktor bzw. Schachtreaktor und der Crackreaktor als ein Bauteil "Pyrolyse-Crack-Reaktor" ausgeführt werden, so daß eine Zone des Pyrolysereaktors als Katalysator verwendet wird (Fig. 6). Es kann ferner in der Weise geschehen, daß sich der Crackreaktor oberhalb des Pyrolysereaktors bzw. Schachtreaktors befindet bzw. daß sich der Crackreaktor im oberen Bereich des Pyrolysereaktors bzw. Schachtreaktors befindet (Fig. 10).

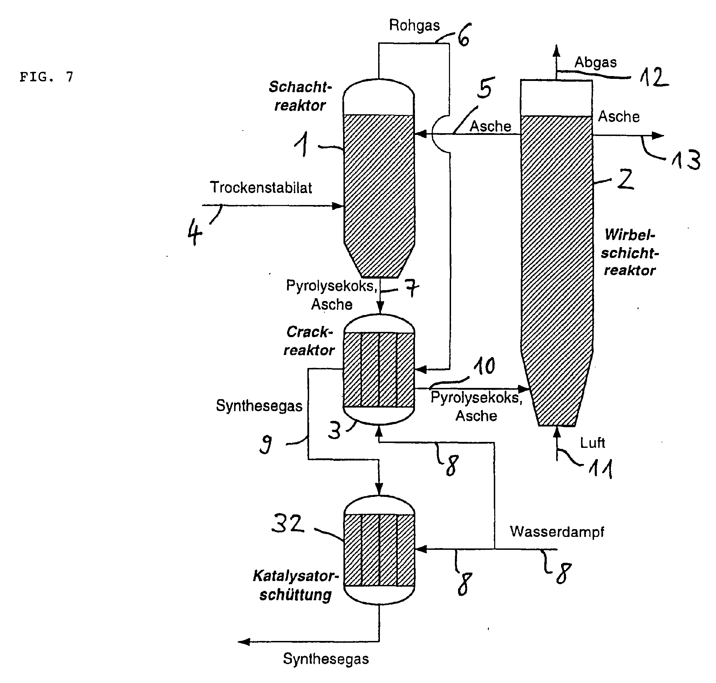

Eine weitere vorteilhafte Weiterbildung ist dadurch gekennzeichnet, daß das im Crackreaktor gereinigte Rohgas in einem weiteren Reaktor mit einer Katalysatorschüttung weiter gereinigt wird (Fig. 7) oder daß der Crackreaktor als Reaktor mit einer Katalysatorschüttung ausgebildet ist. Die Katalysatorschüttung in dem weiteren Reaktor kann aus einer oder mehreren Metallverbindungen bestehen (permanenter Katalysator). Nachdem das Gas den Crackreaktor verlassen hat, wird es dem weiteren Reaktor zugeführt. Der Crackreaktor fungiert in diesem Fall als Vor-Katalysator. Der Crackreaktor ist dann allerdings nicht unbedingt erforderlich. Es ist auch möglich, auf den Crackreaktor zu verzichten, so daß der weitere Reaktor mit der Katalysatorschüttung in diesem Fall als eigentlicher Crackreaktor für die katalytische Reinigung des durch die Pyrolyse erzeugten Rohgases fungieren kann.

Von besonderem Vorteil ist es, wenn das im Crackreaktor gereinigte Rohgas in einem weiteren Reaktor mit einer Katalysatorschüttung weiter gereinigt wird, wenn also neben dem ersten weiteren Reaktor mit einer Katalysatorschüttung ein zweiter weiterer Katalysator mit einer Katalysatorschüttung vorhanden ist. Hierbei ist es von besonderem Vorteil, wenn der erste und der zweite weitere Reaktor abwechselnd aktiviert sind. Der erste und der zweite weitere Reaktor werden also derart betrieben, daß sie abwechselnd aktiv sind. Hierdurch wird eine weitere vorteilhafte Weiterbildung ermöglicht, die darin besteht, daß der erste und der zweite weitere Reaktor abwechselnd regeneriert werden können, nämlich jeweils dann, wenn der jeweils andere weitere Reaktor aktiviert ist. Die Regenerierung erfolgt vorzugsweise durch heißes Abgas aus dem Verbrennungsreaktor bzw. Wirbelschichtreaktor. Auch bei der Verwendung eines ersten weiteren Reaktors und eines zweiten weiteren Reaktors kann auf den Crackreaktor verzichtet werden. Der erste und der zweite weitere Reaktor dienen dann als eigentliche Crackreaktoren zum katalytischen Reinigen des durch die Pyrolyse erzeugten Rohgases.

Eine weitere vorteilhafte Weiterbildung ist dadurch gekennzeichnet, daß der Katalysator zusammen mit dem Wärmeträgermedium zugegeben wird bzw. daß der Katalysator zusammen mit dem Wärmeträgermedium wirksam wird. Wie bereits beschrieben, kann der Pyrolysekoks aus dem Pyrolysereaktor als Katalysator für das Rohgas verwendet werden. Hierdurch wird die katalytische Wirkung des im Pyrolysereaktor bzw. Schachtreaktor entstehenden Pyrolysekokses genutzt. Um dies zu erreichen, wird der Crackreaktor in den Feststoffstrom vom Pyrolysereaktor bzw. Schachtreaktor in den Verbrennungsreaktor bzw. Wirbelschichtreaktor integriert. Bei Berücksichtigung des Temperaturniveaus wäre allerdings eine Gasbehandlung, also eine katalytische Reinigung des Rohgases, in demjenigen Bereich des Pyrolysereaktors bzw. Schachtreaktors wünschenswert, in dem die Asche aus dem Verbrennungsreaktor bzw. Wirbelschichtreaktor zugeführt wird, da dort die Asche (Wärmeträgermedium, Wirbelbettmaterial) das höchste Temperaturniveau hat.

Um dies zu erreichen, wird das Verfahren vorzugsweise derart geführt, daß der Katalysator zusammen mit dem Wärmeträgermedium (Asche) zugegeben wird bzw. daß der Katalysator zusammen mit dem Wärmeträgermedium (Asche) wirksam wird. Beispielsweise kann der Katalysator im oberen Bereich des Pyrolysereaktors bzw. Schachtreaktors zugegeben werden. Dies kann zusammen mit der Asche erfolgen. Der Katalysator kann allerdings auch anderweitig zugegeben werden. Ferner kann der Katalysator in einem Crackreaktor vorhanden sein, dem die Asche zugeführt wird.

Es ist möglich, einen permanenten Katalysator, beispielsweise Metalloxid, zu verwenden. Bei Einsatz eines permanenten Katalysators ergibt sich ein Kreislauf durch den Verbrennungsreaktor bzw. Wirbelschichtreaktor, wobei in der Feuerung die thermische Abreinigung des Katalysators stattfindet. Es kann allerdings auch ein verlorener Katalysator, beispielsweise Koks oder Kohle, verwendet werden.

Die erfindungsgemäße Vorrichtung zur Pyrolyse und Vergasung von Stoffgemischen, die organische Bestandteile enthalten, die insbesondere zur Durchführung des erfindungsgemäßen Verfahrens geeignet ist, umfaßt einen Pyrolysereaktor, vorzugsweise einen Schachtreaktor, dem die organischen Stoffe bzw. das Stoffgemisch, das organische Bestandteile enthält, vorzugsweise Trockenstabilat ^{®} und ein Wärmeträgermedium zuführbar sind, und einen Verbrennungsreaktor, vorzugsweise einen Wirbelschichtreaktor, zum Verbrennen des Pyrolysekokses aus dem Pyrolysereaktor bzw. Schachtreaktor und zum Erzeugen des Wärmeträgermediums. Als Wärmeträgermedium wird vorzugsweise die Asche aus dem Verbrennungsreaktor verwendet. Gemäß der Erfindung ist ein Crackreaktor zum Reinigen des durch die Pyrolyse erzeugten Rohgases vorgesehen. Vorzugsweise ist im Crackreaktor ein Katalysator vorgesehen.

Vorteilhafte Weiterbildungen sind in den weiteren Unteransprüchen beschrieben.

Durch die Erfindung werden ein Verfahren und eine Vorrichtung geschaffen, durch die aus einem Brennstoff mit einem bestimmten Aschegehalt und hohem flüchtigen Gehalt ein Reingas erzeugt werden kann, das sowohl zur Verwendung in Gasturbinenprozessen und Verbrennungsmotoren als auch zur stofflichen Verwertung geeignet ist, daß also sehr hochwertig ist. Dabei wird die Zielsetzung erreicht, daß kein technischer Sauerstoff verwendet werden muß und daß das Pyrolysegas nicht mit inerten Gasen in Kontakt kommt. Die Erfindung ist insbesondere für die Verarbeitung von Trockenstabilat ^{®} geeignet. Dabei kann davon ausgegangen werden, daß der Feinanteil des Trockenstabilats ^{®} einerseits überdurchschnittlich viele Schadstoffe und andererseits einen hohen Inertanteil (ca. 50 Gew.-%) enthält, der Beitrag des Feinanteils zu einem hochwertigen Gas also gering und die negativen Auswirkungen auf den Aufwand der Pyrolysegas-Reinigung verhältnismäßig hoch sind. Der Wärmeträger wird aus dem Pyrolysekoks auf dem Wege der Verbrennung erzeugt. Dabei durchläuft das gesamte Einsatzmaterial (organische Stoffe, insbesondere Trockenstabilat ^{®} ) mit dem Feinanteil die Pyrolyse und belastet die Gasreinigung. Vorzugsweise wird der Feinanteil direkt der Verbrennung zugeführt; in dem Verbrennungsreaktor wird der Wärmeträger aus diesem Feinanteil und dem Pyrolysekoks erzeugt. Die flüchtigen Schadstoffe des Feinanteils können dadurch in der Verbrennung ausgeschleust und in der Rauchgasreinigung abgeschieden werden. Dadurch wird ausgeschlossen, daß Schadstoffe aus dem Feinanteil in das Pyrolysegas gelangen und die Gasreinigung unnötig aufwendig und teuer werden lassen.

Das bei der Durchführung der Erfindung entstehende Pyrolysegas bzw. Synthesegas kann zur stofflichen und energetischen Verwendung eingesetzt werden, insbesondere zur Stromerzeugung, zur Wärmeerzeugung, zur Erzeugung von Methanol oder zur Erzeugung von Wasserstoff. Es ist möglich, ein wasserstoffreiches Gas zu erzeugen. Die Erfindung kann zur Stromerzeugung genutzt werden, insbesondere in einer Gasturbine. Das Gasturbinenabgas kann als Verbrennungs- und Fluidisierungsluft in der Wirbelschicht des Wirbelschichtreaktors verwendet werden. Die Anlage muß dann allerdings unter Druck betrieben werden oder es ist ein Brenngasverdichter vorzusehen. Die Feuerung in dem Verbrennungsreaktor bzw. Wirbelschichtreaktor liefert Wärme für den Pyrolysereaktor. Durch die Wirbelschicht wird ferner prozeßintern das Wärmeträgermedium, nämlich Asche, erzeugt. Sofern Koks bzw. Pyrolysekoks als Katalysatormaterial eingesetzt wird, kann dieser ebenfalls prozeßintern durch gestufte Luftzuführung in der Wirbelschicht erzeugt werden. Eine Verfahrensführung mit unterstöchiometrischer Verbrennung ist möglich. Es ist ferner möglich, die Nachbehandlung der Pyrolysegase direkt im Entgaser (Pyrolysereaktor) vorzunehmen; das Entgasen und das Cracken können also in einem Reaktor erfolgen.

Ausführungsbeispiele der Erfindung werden nachstehend anhand der beigefügten Zeichnung im einzelnen erläutert. In der Zeichnung zeigt
- Fig. 1: eine Vorrichtung zur Durchführung des erfindungsgemäßen Verfahrens zur Pyrolyse und Vergasung von Stoffgemischen, die organische Bestandteile enthalten in einer schematischen Darstellung,
- Fig. 2: die Vorrichtung gemäß Fig. 1 mit einem Sieb zum Absieben einer Feinfraktion,
- Fig. 3: die Vorrichtung gemäß Fig. 1 mit einer Gasturbine,
- Fig. 4: die Vorrichtung gemäß Fig. 1 mit einer Wasserstoffabtrennung,
- Fig. 5: die Vorrichtung gemäß Fig. 1, wobei der Wirbelschichtreaktor zweistufig betrieben wird,
- Fig. 6: die Vorrichtung gemäß Fig. 1, wobei der Schachtreaktor und der Crackreaktor als ein Bauteil "Pyrolyse-Crack-Reaktor" ausgeführt sind,
- Fig. 7: die Vorrichtung gemäß Fig. 1 mit einem weiteren Reaktor mit Katalysatorschüttung,
- Fig. 8: die Ausführungsform gemäß Fig. 7 mit einem weiteren (zweiten) Reaktor mit einer Katalysatorschüttung,
- Fig. 9: die Ausführungsform gemäß Fig. 3 mit einer Quenche und einem Trockner und
- Fig. 10: eine weitere Ausführungsform, bei der der Katalysator zusammen mit dem Wärmeträgermedium zugegeben wird bzw. wirksam wird.

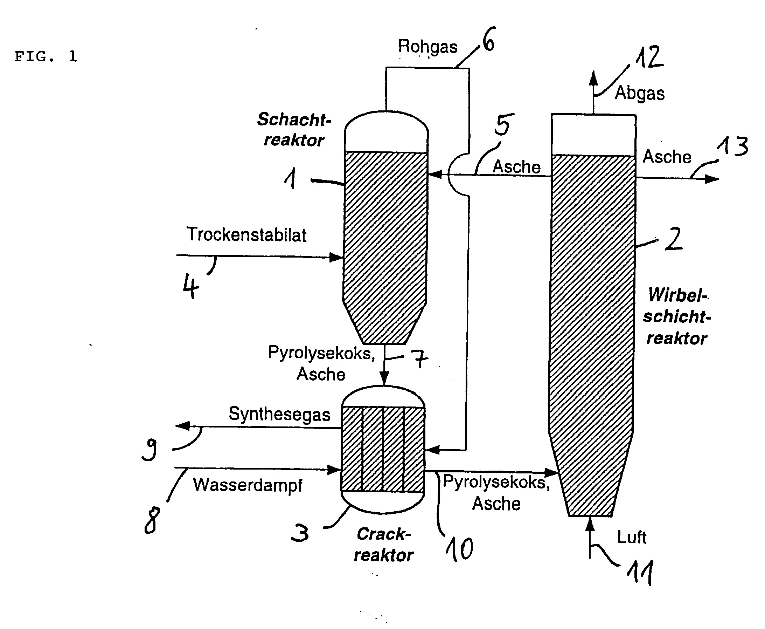

Die in Fig. 1 gezeigte Grundkonfiguration zur Durchführung des Grundprozesses besteht aus einem Schachtreaktor 1, einem Wirbelschichtreaktor 2 und einem Crackreaktor 3. Dem Schachtreaktor 1 werden die organischen Stoffe, vorzugsweise Trockenstabilat ^{®} 4, und das Wärmeträgermedium, vorzugsweise Asche 5, aus dem Wirbelschichtreaktor 2 zugeführt. Das in den Schachtreaktor 1 eingebrachte Trockenstabilat 4 wird dort mit der heißen Asche 5 aus dem Wirbelschichtreaktor 2 vermischt. Das Trockenstabilat erhitzt sich und entgast (pyrolysiert). Es entsteht ein Gas, nämlich das Rohgas 6, sowie ein Feststoff 7, nämlich Pyrolysekoks und Asche. Das Rohgas 6 verläßt den Schachtreaktor 1 am oberen Ende, der Feststoff 7 verläßt den Schachtreaktor 1 am unteren Ende. Rohgas 6 und Feststoff 7 werden dem Crackreaktor 3 zugeführt. Da der Feststoff 7, nämlich der darin enthaltene Pyrolysekoks, als Katalysator für die Gasreinigung wirkt, wird das Rohgas 6 im Crack-reaktor 3 durch den heißen Feststoff geleitet. Ferner wird hier Wasserdampf 8 zugegeben. Als Ergebnis wird ein katalytisch gereinigtes Gas 9 (Synthesegas, Brenngas) erhalten. Der Feststoff 10 aus dem Crackreaktor 3 (Pyrolysekoks und Asche) wird in den Wirbelschichtreaktor 2 eingebracht und dort mit Luft 11 verbrannt. Das Abgas 12 aus der Wirbelschicht des Wirbelschichtreaktors 2 wird gereinigt. Aus dem Wirbelschichtreaktor 2 kann ferner noch nicht benötigte Asche 13 abgezogen werden.

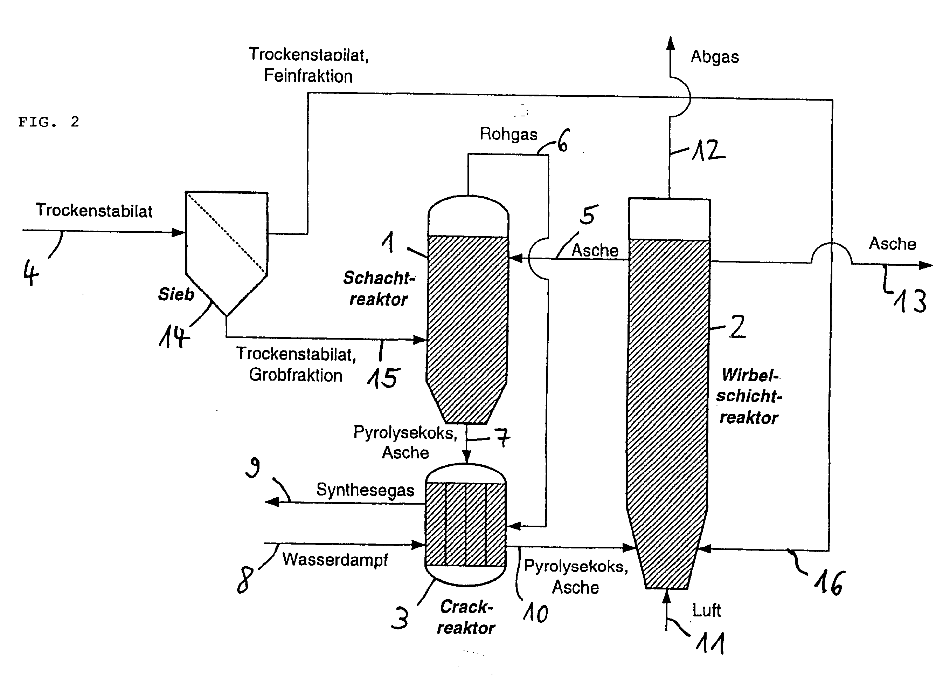

Bei der in Fig. 2 gezeigten Abwandlung des Grundprozesses ist zusätzlich ein Sieb 14 vorhanden, dem das Trockenstabilat ^{®} 4 zugeführt wird. Die Grobfraktion 15 wird in den Schachtreaktor 1 geleitet. Die Feinfraktion 16 wird dem Wirbelschichtreaktor 2 zugeführt.

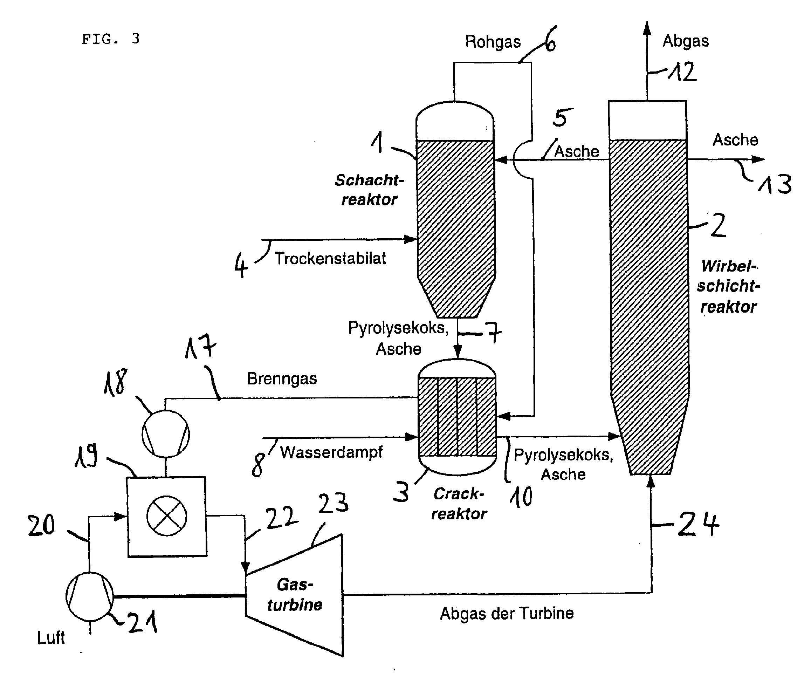

Bei der in Fig. 3 gezeigten Abwandlung wird ein Brenngas 17 produziert, das über einen Verdichter 18 in eine Mischkammer 19 geleitet wird. Dort wird das verdichtete Brenngas mit Luft 20 vermischt, die durch einen Verdichter 21 verdichtet worden ist. Die Mischung 22 wird einer Gasturbine 23 zugeführt und dort in mechanische Energie umgewandelt. Ein Teil der mechanischen Energie der Gasturbine 23 wird dazu verwendet, den Verdichter 21 für die Luft anzutreiben. Auch der Verdichter 18 kann durch die Gasturbine 23 betrieben werden (in der Zeichnung nicht dargestellt). Das Abgas 24 der Gasturbine wird dem Wirbelschichtreaktor 2 zugeführt. Das in dem Crackreaktor 3 produzierte Gas wird bei der Ausführungsform nach Fig. 3 als Brenngas 17 für einen Gasturbinenprozeß verwendet. Der Wirbelschichtreaktor 2 wird nicht mit Luft, sondern mit dem Abgas 24 der Gasturbine 23 betrieben. Dies ist möglich, da das Abgas 24 der Gasturbine 23 immer noch einen Sauerstoffgehalt von etwa 17 % hat.

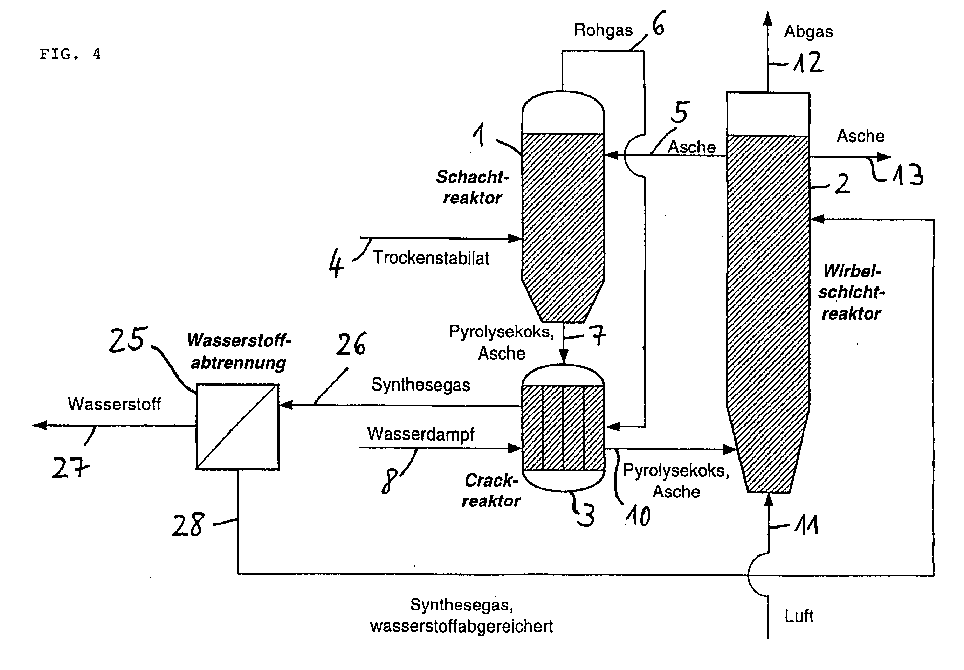

Bei der in Fig. 4 gezeigten Abwandlung ist eine Wasserstoffabtrennung 25 vorgesehen, der das in dem Crackreaktor 3 erzeugte Synthesegas 26 zugeführt wird. Der abgetrennte Wasserstoff 27 wird anderweitig verwendet. Das verbleibende Schwachgas 28 mit geringem Heizwert wird dem Wirbelschichtreaktor 2 zur thermischen Nutzung zugegeben. Sinnvollerweise erfolgt die Wasserstoffabscheidung 25 bei hoher Temperatur, so daß die Teeranteile des Synthesegases 26 nicht kondensieren können. Zur Wasserstoffabtrennung wird vorzugsweise eine Membran bzw. ein Membranverfahren oder eine PSA-Anlage eingesetzt.

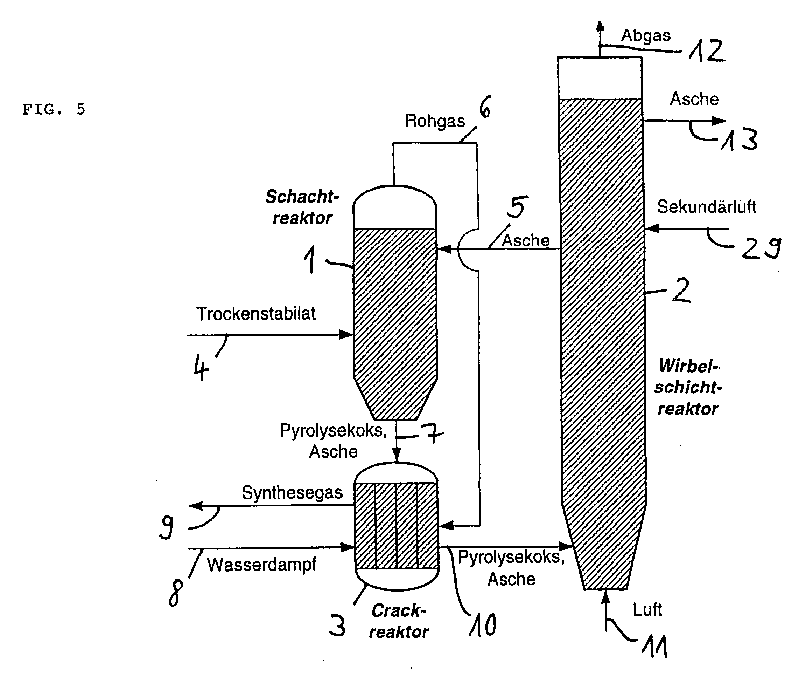

Bei der in Fig. 5 gezeigten Ausführungsform wird der Wirbelschichtreaktor 2 zweistufig betrieben. Am unteren Ende des Wirbelschichtreaktors 2 wird weniger Luft 11 zugegeben als für eine stöchiometrische Verbrennung benötigt wird. Dadurch enthält die Asche 5, die dem Schachtreaktor 1 zugeführt wird, noch Koks, der damit bereits im oberen Teil des Schachtreaktors (Entgasers) 1 katalytische Wirkung hat. Oberhalb der Ausförderung der Asche 5 aus dem Wirbelschichtreaktor 2 wird weitere Luft, nämlich Sekundärluft 29, zugegeben, um eine vollständige Verbrennung zu erreichen und das Abgas 12 ― gereinigt ― in die Umgebung abgeben zu können.

Bei der in Fig. 6 gezeigten Ausführungsform werden der Schachtreaktor und der Crackreaktor als ein Bauteil ausgeführt, nämlich als Pyrolyse-Crack-Reaktor 30. Dabei wird eine Zone 31, nämlich die untere Zone, des Pyrolysereaktors 1 als Katalysator verwendet.

Bei der in Fig. 7 gezeigten Ausführungsform ist zusätzlich zu dem Crackreaktor 3 ein weiterer Reaktor 32 mit einer Katalysatorschüttung vorhanden. Das durch den Katalysator in dem Crackreaktor 3 gereinigte Rohgas wird in dem weiteren Reaktor 32 weiter gereinigt. Dem Crackreaktor 3 und dem weiteren Reaktor 32 wird jeweils Wasserdampf 8 zugeführt. Nachdem das Gas bzw. Synthesegas 9 den Crackreaktor 3 verläßt, wird es in dem weiteren Reaktor 32, der mit einer Katalysatorschüttung gefüllt ist, zugeführt. Diese Katalysatorschüttung besteht aus einer oder mehreren Metallverbindungen (permanenter Katalysator). Der Crackreaktor 3 fungiert in diesem Fall als Vor-Katalysator. Bei der Ausführungsform nach Fig. 7 wäre es auch möglich, den Crackreaktor 3 wegzulassen. In diesem Fall würde die katalytische Reinigung des Rohgases durch den Reaktor 32 mit der Katalysatorschüttung erfolgen.

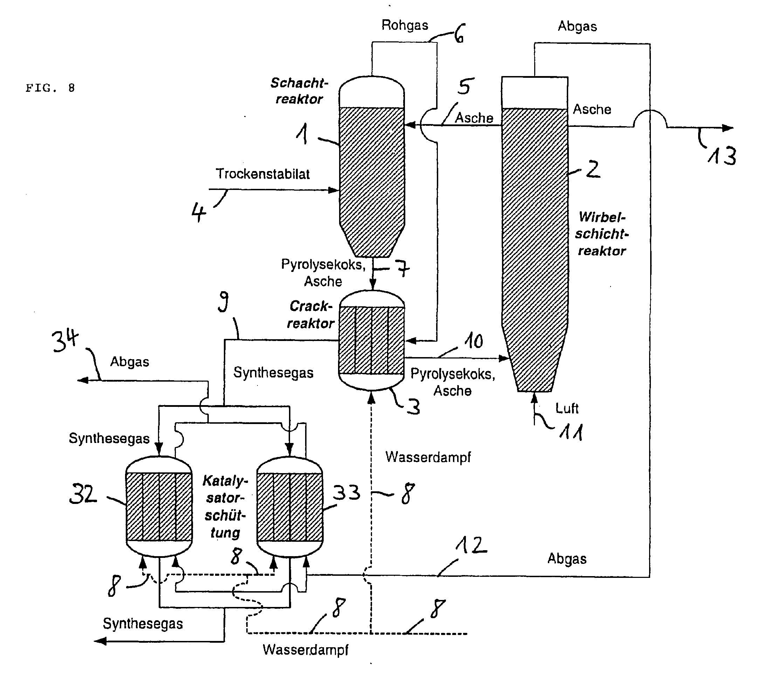

Die Fig. 8 zeigt eine Weiterbildung der Ausführungsform nach Fig. 7. Bei dieser Weiterbildung ist neben dem ersten weiteren Reaktor 32 mit einer Katalysatorschüttung ein zweiter weiterer Reaktor 33 mit einer Katalysatorschüttung vorhanden. Das Synthesegas 9 aus dem Crackreaktor 3 wird abwechselnd dem ersten weiteren Reaktor 32 und dem zweiten weiteren Reaktor 33 zugeführt. Dem zur jeweiligen Zeit aktiven weiteren Reaktor 32, 33, dem das Synthesegas 9 zugeführt wird, wird gleichzeitig auch Wasserdampf 8 zugeführt. Der jeweils andere weitere Reaktor 33, 32 kann währenddessen regeneriert werden. Zur Regeneration wird das Abgas 12 aus dem Wirbelschichtreaktor 2 verwendet. Das dem jeweiligen weiteren Reaktor 33, 32 verlassende Abgas 34 kann einer Abgasreinigung zugeführt werden.

Auch bei der Ausführungsform nach Fig. 8 ist der Crackreaktor 3 nicht unbedingt erforderlich. Wenn der Crackreaktor 3 nicht vorhanden ist, wird seine Aufgabe von den weiteren Reaktoren 32, 33 erfüllt bzw. von dem jeweils aktiven weiteren Reaktor 32 oder 33.

Wie aus Fig. 8 ersichtlich, wird das Gas, das den Crackreaktor 9 ― der in diesem Fall nicht unbedingt erforderlich ist ― verläßt, einem weiteren Reaktor 32 zugeführt, der mit einer Katalysatorschüttung gefüllt ist. Diese Katalysatorschüttung besteht aus z.B. einer oder mehreren Metallverbindungen (wie in der Ausführungsform nach Fig. 7). Die Katalysatorschüttung wird durch im Synthesegas 9 enthaltene Bestandteile wie beispielsweise Staub, Kohlenstoff etc. in ihrer Wirksamkeit reduziert. Deshalb existiert parallel zum ersten weiteren Reaktor 32 ein zweiter weiterer Reaktor 33 mit einer zweiten Katalysatorschüttung, die während der aktiven Zeit des ersten weiteren Katalysators 32 durch heißes Abgas 12 aus dem Wirbelschichtreaktor 2 regeneriert wird. Dabei erhitzt sich diese Katalysatorschüttung des zweiten weiteren Reaktors 33 durch das heiße Abgas 12 sowie durch ablaufende Reaktionen. Sobald die Katalysatorschüttung im ersten weiteren Reaktor 32 in ihrer Wirksamkeit nachläßt, wird der Gasstrom des Synthesegases 9 zur Reinigung durch die Katalysatorschüttung des zweiten weiteren Reaktors 33 geleitet, und die Katalysatorschüttung des ersten weiteren Reaktors 32 wird mittels Durchleitung heißen Abgases 12 aus dem Wirbelschichtreaktor 2 regeneriert.

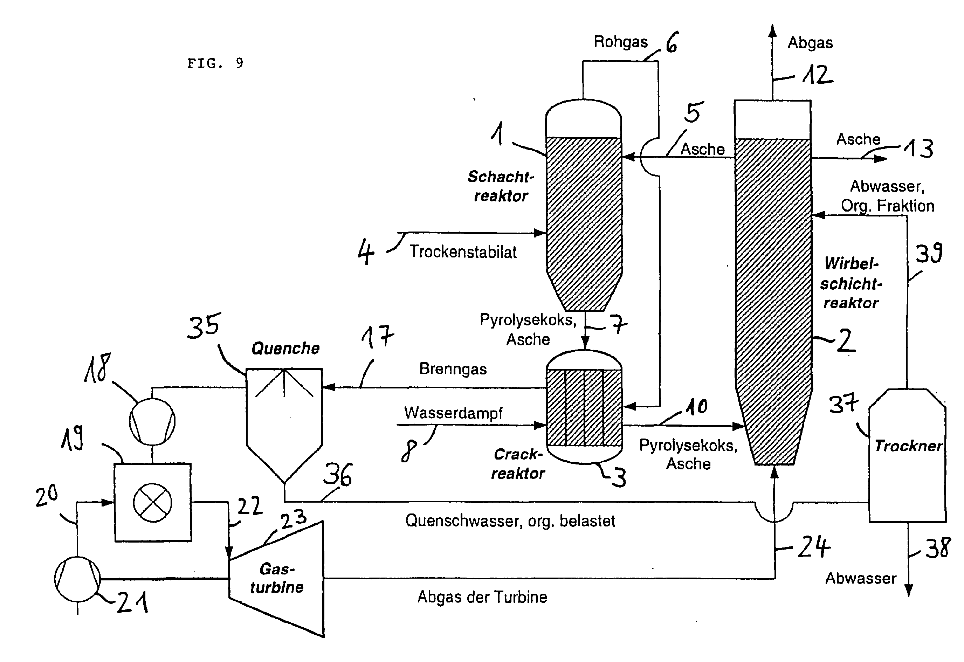

Die Fig. 9 zeigt eine Abwandlung der in Fig. 3 gezeigten Ausführungsform, bei der das Brenngas 17 vor der Verdichtung 18 durch eine Quenche 35 geleitet wird. Bevor das Brenngas 17 für die Brennkammer 19 in dem Verdichter 18 verdichtet wird, wird es in der Quenche 35 gekühlt und gereinigt. Das Abwasser 36 aus der Quenche 35 wird einem Trockner 37 zugeleitet, in dem es eingedampft wird. Die Trocknerbrüden werden kondensiert; sie können als Abwasser 38 ohne weitere Klärung abgegeben werden. Der "eingedickte" Rest 39 aus dem Trockner 37 enthält sämtliche organischen Bestandteile. Er wird dem Wirbelschichtreaktor 2 zugeführt und dort thermisch behandelt. Als Alternative ist eine direkte thermische Behandlung des gesamten in der Quenche 35 anfallenden Abwassers 36 in der Wirbelschicht des Wirbelschichtreaktors 2 möglich (in diesem Fall wird das Abwasser 36 der Quenche 35 unmittelbar, also ohne Trockner 37, als Abwasser 39 dem Wirbelschichtreaktor 2 zugeleitet; in der Zeichnung nicht dargestellt).

Bei den in den Fig. 1 bis 9 gezeigten Ausführungsformen wird die katalytische Wirkung des im Schachtreaktor 1 entstehenden Pyrolysekokses genutzt. Bei diesen Ausführungsformen ist der Crackreaktor 3 in den Feststoffstrom vom Schachtreaktor 1 in den Wirbelschichtreaktor 2 integriert. Bei Berücksichtigung des Temperaturniveaus wäre allerdings eine Gasbehandlung in demjenigen Bereich des Schachtreaktors 1 wünschenswert, in dem die Asche 5 aus dem Wirbelschichtreaktor 2 zugeführt wird, da dort der Feststoff (die Asche) das höchste Temperaturniveau hat.

Um dies zu realisieren kann die Verfahrensführung nach Fig. 10 vorgesehen werden. Hier wird ein Katalysator 40 im oberen Bereich des Schachtreaktors 1 zugegeben. Der Schachtreaktor und der Crackreaktor sind auch hier als ein Bauteil ausgeführt, nämlich als Pyrolyse-Crack-Reaktor 30'. Die Zugabe des Katalysators 40 im oberen Bereich des Schachtreaktors 1 muß allerdings nicht zwangsläufig mit der Asche 5 aus dem Wirbelschichtreaktor 2 erfolgen. Der Katalysator kann auch auf andere Weise zugegeben werden. Ferner kann der Katalysator in dem oberen Bereich des Schachtreaktors 1 vorhanden sein, also in dem mit 41 bezeichneten Bereich des Pyrolyse-Crack-Reaktors 30'. Bei der Ausführungsform nach Fig. 10 kann ein permanenter Katalysator wie beispielsweise Metalloxid verwendet werden. Es kann allerdings auch ein verlorener Katalysator wie beispielsweise Koks oder Kohle verwendet werden. Bei Einsatz eines permanenten Katalysators ergibt sich ein Kreislauf durch den Wirbelschichtreaktor 2, wobei in der Feuerung des Wirbelschichtreaktors 2 die thermische Abreinigung des Katalysators stattfindet. Der Crackreaktor wird automatisch in den Schachtreaktor 1 integriert, so daß dieser zum Pyrolyse-Crack-Reaktor 30' wird.

## Patentansprüche

1. Verfahren zur Pyrolyse und Vergasung von Stoffgemischen, die organische Bestandteile enthalten,
bei dem die organischen Stoffe (4) bzw. das Stoffgemisch, das organische Bestandteile enthält, in einem Pyrolysereaktor (1) mit einem Wärmeträgermedium aus einem Verbrennungs-Wirbelschichtreaktor (2) in Kontakt gebracht und pyrolysiert werden,
bei dem der Feststoff (7), nämlich Pyrolysekoks und Asche, aus dem Pyrolysereaktor (1) einem Crackreaktor (3) zugeführt wird, in dem das durch die Pyrolyse erzeugte Rohgas gereinigt wird,
bei dem der Feststoff (10), nämlich Pyrolysekoks und Asche, aus dem Crack-reaktor (3) in den Verbrennungs-Wirbelschichtreaktor (2) eingebracht und unter Luftzufuhr (11) verbrannt wird, und
wobei das Wärmeträgermedium aus der Asche (5) des Verbrennungsreaktors (2) besteht.

2. Verfahren zur Pyrolyse und Vergasung von Stoffgemischen, die organische Bestandteile enthalten,
bei dem die organischen Stoffe (4) bzw. das Stoffgemisch, das organische Bestandteile enthält, in einem Pyrolysereaktor (1) mit einem Wärmeträgermedium aus einem Crackreaktor (41) in Kontakt gebracht und pyrolysiert werden,
bei dem der Feststoff (10), nämlich Pyrolysekoks und Asche, aus dem Pyrolysereaktor (1) in einen Verbrennungs-Wirbelschichtreaktor (2) eingebracht und unter Luftzufuhr (11) verbrannt wird
und bei dem das Wärmeträgermedium aus dem Verbrennungs-Wirbelschichtreaktor (2) dem Crackreaktor (41) zugeführt wird, in dem das durch die Pyrolyse erzeugte Rohgas gereinigt wird,
wobei das Wärmeträgermedium aus der Asche (5) des Verbrennungsreaktors (2) besteht.

3. Verfahren nach einem der vorhergehenden Ansprüche, **dadurch gekennzeichnet, daß** im Crackreaktor (3, 41) ein Katalysator vorgesehen ist.

4. Verfahren nach einem der vorhergehenden Ansprüche, **dadurch gekennzeichnet, daß** die Reinigung unter Zugabe von Wasserdampf (8) durchgeführt wird.

5. Verfahren nach einem der vorhergehenden Ansprüche, **dadurch gekennzeichnet, daß** der Pyrolysekoks (7) aus dem Pyrolysereaktor (1) als Katalysator für das Rohgas (6) verwendet wird.

6. Verfahren nach einem der vorhergehenden Ansprüche, **dadurch gekennzeichnet, daß** aus den organischen Stoffen (4) vor der Pyrolyse eine Feinfraktion (16) abgetrennt (14) wird (Fig. 2).

7. Verfahren nach Anspruch 6, **dadurch gekennzeichnet, daß** die abgetrennte (14) Feinfraktion (16) dem Verbrennungsreaktor (2) zugeführt wird.

8. Verfahren nach einem der vorhergehenden Ansprüche, **dadurch gekennzeichnet, daß** durch die Reinigung des Rohgases ein Synthesegas (17) erzeugt wird.

9. Verfahren nach Anspruch 8, **dadurch gekennzeichnet, daß** das Synthesegas (17) in einer Gasturbine (23) energetisch verwertet wird (Fig. 3; Fig. 9).

10. Verfahren nach Anspruch 9, **dadurch gekennzeichnet, daß** das Abgas (24) aus der energetischen Verwertung (23) dem Verbrennungsreaktor (2) zugeführt wird.

11. Verfahren nach einem der Ansprüche 8 bis 10, **dadurch gekennzeichnet, daß** das Synthesegas (17) zunächst gekühlt und/oder gereinigt (35) wird (Fig. 9).

12. Verfahren nach Anspruch 11, **dadurch gekennzeichnet, daß** das Abwasser (36) aus der Kühlung und/oder Reinigung (35) eingedampft (37) wird.

13. Verfahren nach Anspruch 12, **dadurch gekennzeichnet, daß** der Rest (39) aus der Eindampfung (37) dem Verbrennungsreaktor (2) zugeführt wird.

14. Verfahren nach einem der vorhergehenden Ansprüche, **dadurch gekennzeichnet, daß** durch die Reinigung des Rohgases (6) ein Synthesegas (9, 26) erzeugt wird.

15. Verfahren nach Anspruch 14, **dadurch gekennzeichnet, daß** aus dem Synthesegas (26) Wasserstoff (27) abgetrennt (25) wird (Fig. 4).

16. Verfahren nach Anspruch 15, **dadurch gekennzeichnet, daß** das bei der Wasserstoffabtrennung (25) verbleibende Schwachgas (28) dem Verbrennungsreaktor (2) zugeführt wird.

17. Verfahren nach einem der vorhergehenden Ansprüche, **dadurch gekennzeichnet, daß** der Verbrennungsreaktor (2) zweistufig betrieben wird (Fig. 5).

18. Verfahren nach einem der vorhergehenden Ansprüche, **dadurch gekennzeichnet, daß** eine Zone des Pyrolysereaktors (1) als Crackreaktor verwendet wird (Fig. 6; Fig. 10).

19. Verfahren nach einem der vorhergehenden Ansprüche, **dadurch gekennzeichnet, daß** das im Crackreaktor (3) gereinigte Rohgas (6) in einem weiteren Reaktor (32) mit einer Katalysatorschüttung weiter gereinigt wird (Fig. 7) oder daß der Crackreaktor als Reaktor mit einer Katalysatorschüttung ausgebildet ist.

20. Verfahren nach Anspruch 19, **dadurch gekennzeichnet, daß** das im Crackreaktor (3) gereinigte Rohgas (6) in einem weiteren Reaktor (33) mit einer Katalysatorschüttung weiter gereinigt wird, wobei der erste weitere Reaktor (32) und der zweite weitere Reaktor (33) abwechselnd aktiviert werden (Fig. 8).

21. Verfahren nach Anspruch 20, **dadurch gekennzeichnet, daß** der erste weitere Reaktor (32) und der zweite weitere Reaktor (33) vorzugsweise abwechselnd regeneriert werden, vorzugsweise durch heißes Abgas (12) aus dem Verbrennungsreaktor (2).

22. Verfahren nach einem der Ansprüche 19 bis 21, **dadurch gekennzeichnet, daß** der Crackreaktor (3) entfällt und der weitere Reaktor (32) oder die weiteren Reaktoren (32, 33) die Rohgasreinigung übernehmen.

23. Verfahren nach einem der vorhergehenden Ansprüche, **dadurch gekennzeichnet, daß** der Katalysator zusammen mit dem Wärmeträgermedium zugegeben wird bzw. wirksam wird (Fig. 10).

24. Verfahren nach Anspruch 23, **dadurch gekennzeichnet, daß** der Katalysator (40) dem Wärmeträgermedium (5) zugegeben wird.

25. Verfahren nach Anspruch 23 oder 24, **dadurch gekennzeichnet, daß** ein permanenter Katalysator verwendet wird.

26. Verfahren nach einem der Ansprüche 23 bis 25, **dadurch gekennzeichnet, daß** ein verlorener Katalysator verwendet wird.

27. Vorrichtung zur Pyrolyse und Vergasung von Stoffgemischen, die organische Bestandteile enthalten, insbesondere zur Durchführung des Verfahrens nach einem der Ansprüche 1 und 3 bis 26
mit einem Pyrolysereaktor (1), vorzugsweise einem Schachtreaktor, einem Verbrennungs-Wirbelschichtreaktor (2) und einem Crackreaktor (3),
wobei dem Pyrolysereaktor (1) die organischen Stoffe (4) bzw. das Stoffgemisch, das organische Bestandteile enthält, und ein Wärmeträgermedium (5) aus dem Verbrennungs-Wirbelschichtreaktor (2) zuführbar sind,
wobei dem Crackreaktor (3) der Feststoff (7), nämlich Pyrolysekoks und Asche, aus dem Pyrolysereaktor (1) und das durch die Pyrolyse erzeugte Rohgas zuführbar sind,
wobei der Feststoff (10), nämlich Pyrolysekoks und Asche, aus dem Crackreaktor (3) in den Verbrennungs-Wirbelschichtreaktor (2) einbringbar und unter Luftzufuhr verbrennbar ist und
wobei das Wärmeträgermedium aus der Asche (5) des Verbrennungsreaktors (2) besteht.

28. Vorrichtung zur Pyrolyse und Vergasung von Stoffgemischen, die organische Bestandteile enthalten, insbesondere zur Durchführung des Verfahrens nach einem der Ansprüche 2 bis 26,
mit einem Pyrolysereaktor (1), vorzugsweise einem Schachtreaktor, einem Verbrennungs-Wirbelschichtreaktor (2) und einem Crackreaktor (41),
wobei dem Pyrolysereaktor (1) die organischen Stoffe (4) bzw. das Stoffgemisch, das organische Bestandteile enthält, und ein Wärmeträgermedium (5) aus dem Crackreaktor (41) zuführbar sind,
wobei der Feststoff (10), nämlich Pyrolysekoks und Asche, aus dem Pyrolysereaktor (1) in den Verbrennungs-Wirbelschichtreaktor (2) einbringbar und unter Luftzufuhr verbrennbar ist,
wobei dem Crackreaktor (41) das Wärmeträgermedium aus dem Verbrennungs-Wirbelschichtreaktor (2) und das durch die Pyrolyse erzeugte Rohgas zuführbar sind und
wobei das Wärmeträgermedium aus der Asche (5) des Verbrennungsreaktors (2) besteht.

29. Vorrichtung nach Anspruch 27 oder 28, **dadurch gekennzeichnet, daß** im Crackreaktor (3, 41) ein Katalysator vorgesehen ist.

30. Vorrichtung nach Anspruch 27 oder 28, **gekennzeichnet durch** ein Sieb (14) zum Absieben oder eine sonstige Trennvorrichtung zum Abtrennen einer Feinfraktion (16) aus den organischen Stoffen (4) (Fig. 2).

31. Vorrichtung nach einem der Ansprüche 27 bis 30, **gekennzeichnet durch** eine Gasturbine (23) zum energetischen Verwerten des Synthesegases (17) aus dem Crackreaktor (3, 41)

32. Vorrichtung nach Anspruch 31, **gekennzeichnet durch** eine Quenche (35) zum Kühlen und/oder Reinigen des Synthesegases (9).

33. Vorrichtung nach Anspruch 32, **gekennzeichnet durch** einen Trockner (37) zum Kühlen und/oder Reinigen des Abwassers (36) aus der Quenche (35).

34. Vorrichtung nach einem der Ansprüche 27 bis 33, **gekennzeichnet durch** eine Wasserstoffabtrennung (25) zum Abtrennen von Wasserstoff (27) aus dem Synthesegas (26) aus dem Crackreaktor (3,41)

35. Vorrichtung nach einem der Ansprüche 27 bis 34, **dadurch gekennzeichnet, daß** der Verbrennungsreaktor (2) zweistufig betreibbar ist.

36. Vorrichtung nach einem der Ansprüche 27 bis 35, **dadurch gekennzeichnet, daß** der Pyrolysereaktor (1) bzw. Schachtreaktor und der Crackreaktor (3) als ein Bauteil ausgeführt sind, vorzugsweise als Pyrolyse-Crack-Reaktor (30, 30').

37. Vorrichtung nach einem der Ansprüche 27 bis 36, **gekennzeichnet durch** einen weiteren Reaktor (32) mit einer Katalysatorschüttung.

38. Vorrichtung nach Anspruch 37, **gekennzeichnet durch** einen zweiten weiteren Reaktor (33) mit einer Katalysatorschüttung.

## Claims

1. A method for the pyrolysis and gasification of substance mixtures containing organic constituents,
in which the organic substances (4) or the substance mixture containing the organic constituents are brought into contact with a heat transfer medium from a fluidised-bed combustion reactor (2) in a pyrolysis reactor (1) and are pyrolysed,
in which the solid matter (7), namely pyrolysis coke and ash, is conducted from the pyrolysis reactor (1) to a crack reactor (3) in which the raw gas produced by pyrolysis is purified,
in which the solid matter (10), namely pyrolysis coke and ash, is introduced from the crack reactor (3) into the fluidised-bed combustion reactor (2) and is combusted under the admission of air (11), and
wherein the heat transfer medium consists of the ash (5) of the combustion reactor (2).

2. A method for the pyrolysis and gasification of substance mixtures containing organic constituents,
in which the organic substances (4) or the substance mixture containing the organic constituents are brought into contact with a heat transfer medium from a crack reactor (41) in a pyrolysis reactor (1) and are pyrolysed,
in which the solid matter (10), namely pyrolysis coke and ash, is introduced from the pyrolysis reactor (1) into a fluidised-bed combustion reactor (2) and is combusted under the admission of air (11) and in which the heat transfer medium is conducted from the fluidised-bed combustion reactor (2) to the crack reactor (41) in which the raw gas produced by pyrolysis is purified,
wherein the heat transfer medium consists of the ash (5) of the combustion reactor (2).

3. The method according to one of the foregoing claims, **characterised in that** a catalyst is provided for in the crack reactor (3, 41).

4. The method according to one of the foregoing claims, **characterised in that** the purification is carried out under the addition of water vapour (8).

5. The method according to one of the foregoing claims, **characterised in that** the pyrolysis coke (7) from the pyrolysis reactor (1) is used as the catalyst for the raw gas (6).

6. The method according to one of the foregoing claims, **characterised in that** a fine fraction (16) is separated (14) from the organic substances (4) prior to the pyrolysis (Fig. 2).

7. The method according to Claim 6, **characterised in that** the separated (14) fine fraction (16) is conducted to the combustion reactor (2).

8. The method according to one of the foregoing claims, **characterised in that** a synthesis gas (17) is produced by the purification of the raw gas.

9. The method according to Claim 8, **characterised in that** the synthesis gas (17) is exploited in terms of energy in a gas turbine (23) (Fig. 3; Fig. 9).

10. The method according to Claim 9, **characterised in that** the waste gas (24) is conducted from the energy exploitation stage (23) to the combustion reactor (2).

11. The method according to one of Claims 8 to 10, **characterised in that** the synthesis gas (17) is initially cooled and/or purified (35) (Fig. 9).

12. The method according to Claim 11, **characterised in that** the waste water (36) from the cooling and/or purification process (35) is evaporated (37).

13. The method according to Claim 12, **characterised in that** the residue (39) from the evaporation (37) is conducted to the combustion reactor (2).

14. The method according to one of the foregoing claims, **characterised in that** a synthesis gas (9, 26) is produced by the purification of the raw gas (6).

15. The method according to Claim 14, **characterised in that** hydrogen (27) is separated (25) from the synthesis gas (26) (Fig. 4).

16. The method according to Claim 15, **characterised in that** the lean gas (28) remaining during the hydrogen separation (25) is conducted to the combustion reactor (2).

17. The method according to one of the foregoing claims, **characterised in that** the combustion reactor (2) is operated as a two-stage process (Fig. 5).

18. The method according to one of the foregoing claims, **characterised in that** a zone of the pyrolysis reactor (1) is used as a crack reactor (Fig. 6; Fig. 10).

19. The method according to one of the foregoing claims, **characterised in that** the raw gas (6) purified in the crack reactor (3) is further purified (Fig. 7) in a further reactor (32) with a catalyst deposit, or that the crack reactor is designed as a reactor with a catalyst deposit.

20. The method according to Claim 19, **characterised in that** the raw gas (6) purified in the crack reactor (3) is further purified in a further reactor (33) with a catalyst deposit, wherein the first further reactor (32) and the second further reactor (33) are activated alternately (Fig. 8).

21. The method according to Claim 20, **characterised in that** the first further reactor (32) and the second further reactor (33) are preferably regenerated alternately, preferably by hot waste gas (12) from the combustion reactor (2).

22. The method according to one of Claims 19 to 21, **characterised in that** the crack reactor (3) is done without and the further reactor (32) or the further reactors (32, 33) take over the raw gas purification.

23. The method according to one of the foregoing claims, **characterised in that** the catalyst is added and becomes effective together with the heat transfer medium (Fig. 10).

24. The method according to Claim 23, **characterised in that** the catalyst (40) is added to the heat transfer medium (5).

25. The method according to one of Claims 23 or 24, **characterised in that** a permanent catalyst is used.

26. The method according to one of Claims 23 to 25, **characterised in that** a lost catalyst is used.

27. A device for the pyrolysis and gasification of substance mixtures containing organic constituents, in particular for the performance of the method according to one of Claims 1 and 3 to 26,
with a pyrolysis reactor (1), preferably a shaft reactor, a fluidised-bed combustion reactor (2) and a crack reactor (3),
wherein the organic substances (4) or the substance mixture containing the organic constituents and a heat transfer medium (5) can be conducted from the fluidised-bed combustion reactor (2) to the pyrolysis reactor (1),
wherein the solid matter (7), namely pyrolysis coke and ash, from the pyrolysis reactor (1) and the raw gas produced by the pyrolysis can be conducted to the crack reactor (3),
wherein the solid matter (10), namely pyrolysis coke and ash, from the crack reactor (3) can be introduced into the fluidised-bed combustion reactor (2) and can be combusted under the admission of air, and wherein the heat transfer medium consists of ash (5) of the combustion reactor (5).

28. A device for the pyrolysis and gasification of substance mixtures containing organic constituents, in particular for the performance of the method according to one of Claims 2 to 26,
with a pyrolysis reactor (1), preferably a shaft reactor, a fluidised-bed combustion reactor (2) and a crack reactor (41),
wherein the organic substances (4) or the substance mixture containing the organic constituents and a heat transfer medium (5) can be conducted from the crack reactor (41) to the pyrolysis reactor (1),
wherein the solid matter (10), namely pyrolysis coke and ash, from the pyrolysis reactor (1) can be introduced into the fluidised-bed combustion reactor (2) and can be combusted under the admission of air,
wherein the heat transfer medium from the fluidised-bed combustion reactor (2) and the raw gas produced by the pyrolysis can be conducted to the crack reactor (41), and
wherein the heat transfer medium consists of ash (5) of the combustion reactor (5).

29. The device according to Claim 27 or 28, **characterised in that** a catalyst is provided for in the crack reactor (3, 41).

30. The device according to Claim 27 or 28, **characterised by** a screen (14) for screening out, or other separation device for the separation, of a fine fraction (16) from the organic substances (4) (Fig. 2).

31. The device according to one of Claims 27 to 30, **characterised by** a gas turbine (23) for the exploitation in terms of energy of the synthesis gas (17) from the crack reactor (3, 41).

32. The device according to Claim 31, **characterised by** a quench (35) for the cooling and/or purification of the synthesis gas (9).

33. The device according to Claim 32, **characterised by** a dryer (37) for the cooling and/or purification of the waste water (36) from the quench (35).

34. The device according to one of Claims 27 to 33, **characterised by** a hydrogen separation arrangement (25) for the separation of hydrogen (27) from the synthesis gas (26) from the crack reactor (3, 41).

35. The device according to one of Claims 27 to 34, **characterised in that** the combustion reactor (2) can be operated as a two-stage process.

36. The device according to one of Claims 27 to 35, **characterised in that** the pyrolysis reactor (1) or shaft reactor and the crack reactor (3) are designed as one component, preferably as a pyrolysis-crack reactor (30, 30').

37. The device according to one of Claims 27 to 36, **characterised by** a further reactor (32) with a catalyst deposit.

38. The device according to Claim 37, **characterised by** a second further reactor (33) with a catalyst deposit.

## Revendications

1. Procédé pour pyrolyser et gazéifier des mélanges de matières, qui contiennent des composants organiques,
dans lequel, les matières organiques (4) et le mélange de matière, qui contient des composants organiques, sont mis en contact dans un réacteur de pyrolyse (1) avec un fluide caloporteur provenant d'un réacteur à lit fluidisé de combustion (2) et sont pyrolysés,
dans lequel la matière solide (7), c'est-à-dire du coke de pyrolyse et la cendre, provenant du réacteur de pyrolyse (1) est amenée à un réacteur de craquage (3), dans lequel le gaz brut généré par la pyrolyse est nettoyé,
dans lequel la matière solide (10), c'est-à-dire du coke de pyrolyse et de la cendre, provenant du réacteur de craquage (3) est introduite dans le réacteur à lit fluidisé de combustion (2) et est brûlée avec admission d'air (11), et
le fluide caloporteur est à base de la cendre (5) du réacteur de combustion (2).

2. Procédé pour pyrolyser et gazéifier des mélanges de matière qui contiennent des composants organiques,
dans lequel les matières organiques (4) et le mélange de matière, qui contient des composants organiques, sont mis en contact dans un réacteur de pyrolyse (1) avec un fluide caloporteur provenant d'un réacteur de craquage (41) et pyrolysés,
dans lequel la matière solide (10), c'est-à-dire du coke de pyrolyse et de la cendre, provenant du réacteur de pyrolyse (1) est introduite dans un réacteur à lit fluidisé de combustion (2) et est brûlée avec admission d'air (11),
et dans lequel le fluide caloporteur provenant du réacteur à lit fluidisé de combustion (2) est amené au réacteur de craquage (41) dans lequel le gaz brut généré par la pyrolyse est nettoyé,
le fluide caloporteur étant à base de la cendre (5) du réacteur de combustion (2).

3. Procédé selon l'une des revendications précédentes, **caractérisé en ce qu'**un catalyseur est prévu dans le réacteur de craquage (3, 41).

4. Procédé selon l'une des revendications précédentes, **caractérisé en ce que** le nettoyage est effectué avec l'addition de vapeur d'eau (8).

5. Procédé selon l'une des revendications précédentes, **caractérisé en ce que** le coke de pyrolyse (7) provenant du réacteur de pyrolyse (1) est utilisé comme catalyseur pour le gaz brut (6).

6. Procédé selon l'une des revendications précédentes, **caractérisé en ce qu'**une fraction fine (16) est séparée (14) à partir des matières (4) organiques avant la pyrolyse (figure 2).

7. Procédé selon la revendication 6, **caractérisé en ce que** la fraction fine (16) séparée (14) est amenée au réacteur de combustion (2).

8. Procédé selon l'une des revendications précédentes, **caractérisé en ce qu'**un gaz de synthèse (17) est généré par le nettoyage du gaz brut.

9. Procédé selon la revendication 8, **caractérisé en ce que** le gaz de synthèse (17) est exploité au plan énergétique dans une turbine à gaz (23) (fig. 3; fig. 9).

10. Procédé selon la revendication 9, **caractérisé en ce que** les gaz brûlés (24) provenant de l'exploitation (23) énergétique sont amenés au réacteur de combustion (2).

11. Procédé selon l'une des revendications 8 à 10, **caractérisé en ce que** le gaz de synthèse (17) est refroidi et/ou nettoyé (35) pour commencer (fig. 9).

12. Procédé selon la revendication 11, caractérisé en que l'eau usée (36) provenant du refroidissement et/ou du nettoyage (35) est réduite par évaporation (37).

13. Procédé selon la revendication 12, **caractérisé en ce que** le reste (39) provenant de la réduction par évaporation (37) est amené au réacteur de combustion (2).

14. Procédé selon l'une des revendications précédentes, **caractérisé en ce qu'**un gaz de synthèse (9, 26) est généré par le nettoyage du gaz brut (6).

15. Procédé selon la revendication 14, **caractérisé en ce que** l'hydrogène (27) est séparé (25) du gaz de synthèse (26) (fig. 4).

16. Procédé selon la revendication 15, caractérisé en ce le gaz faible (28) restant lors de la séparation de l'hydrogène (25) est amené au réacteur de combustion (2).

17. Procédé selon l'une des revendications précédentes, **caractérisé en ce que** le réacteur de combustion (2) est exploité avec deux étages (fig. 5).

18. Procédé selon l'une des revendications précédentes, caractérisé en qu'une zone du réacteur de pyrolyse (1) est utilisé comme réacteur de craquage (fig. 6; fig. 10).

19. Procédé selon l'une des revendications précédentes, **caractérisé en ce que** le gaz brut (6) nettoyé dans le réacteur de craquage (3) est encore nettoyé dans un autre réacteur (32) avec une charge de catalyseur (fig. 7) ou **en ce que** le réacteur de craquage est conçu comme réacteur avec une charge de catalyseur.

20. Procédé selon la revendication 19, **caractérisé en ce que** le gaz brut (6) nettoyé dans le réacteur de craquage (3) est encore nettoyé dans un autre réacteur (33) avec une charge de catalyseur, le premier autre réacteur (32) et le second autre réacteur (33) étant activés en alternance (fig. 8).

21. Procédé selon la revendication 20, **caractérisé en ce que** le premier autre réacteur (32) et le second autre réacteur (33) sont régénérés de préférence en alternance, de préférence par du gaz brûlé (12) chaud provenant du réacteur de combustion (2).

22. Procédé selon l'une des revendications 19 à 21, **caractérisé en ce que** le réacteur de craquage (3) est supprimé et l'autre réacteur (32) ou les autres réacteurs (32, 33) prennent en charge le nettoyage du gaz brut.

23. Procédé selon l'une des revendications précédentes, **caractérisé en ce que** le catalyseur est ajouté ou devient actif en même temps que le fluide caloporteur (fig. 10).

24. Procédé selon la revendication 23, **caractérisé en ce que** le catalyseur (40) est ajouté au fluide caloporteur (5).

25. Procédé selon la revendication 23 ou 24, **caractérisé en ce qu'**un catalyseur permanent est utilisé.

26. Procédé selon l'une des revendications 23 à 25, **caractérisé en ce qu'**un catalyseur perdu est utilisé.

27. Dispositif pour pyrolyser et gazéifier des mélanges de matières, qui contiennent des composants organiques, en particulier pour mettre en oeuvre le procédé selon l'une des revendications 1 et 3 à 26.
comprenant un réacteur de pyrolyse (1), de préférence un réacteur à cuve, un réacteur à lit fluidisé de combustion (2) et un réacteur de craquage (3).
Les matières (4) organiques et le mélange de matière, qui contient des composants organiques, et un fluide caloporteur (5) provenant du réacteur à lit fluidisé de combustion (2) pouvant être arrivés au réacteur de pyrolyse (1),
la matière solide (7), c'est-à-dire du coke de pyrolyse et de la cendre, provenant du réacteur de pyrolyse (1) et le gaz brut généré par la pyrolyse pouvant être amenés au réacteur de craquage (3),
la matière solide (10), c'est-à-dire du coke de pyrolyse et de la cendre, provenant du réacteur de craquage (3) pouvant être introduite dans le réacteur à lit fluidisé de combustion (2) et pouvant être brûlée avec admission d'air et
le fluide caloporteur étant à base de la cendre (5) du réacteur de combustion (2).

28. Procédé pour pyrolyser et gazéifier des mélanges de matières, qui contiennent des composants organiques, en particulier pour mettre en oeuvre le procédé selon l'une des revendications 2 à 26,
comprenant un réacteur de pyrolyse (1), de préférence un réacteur à cuve, un réacteur à lit fluidisé de combustion (2) et un réacteur de craquage (41),
les matières (4) organiques ou le mélange de matière, qui contient des composants organiques, et un fluide caloporteur (5) provenant du réacteur de craquage (41) pouvant être amenés au réacteur de pyrolyse (1),
la matière solide (10), c'est-à-dire du coke de pyrolyse et de la cendre, provenant du réacteur de pyrolyse (1) pouvant être introduite dans le réacteur à lit fluidisé de combustion (2) et pouvant être brûlée avec admission d'air,
le fluide caloporteur provenant du réacteur à lit fluidisé de combustion (2) et le gaz brut généré par la pyrolyse pouvant être amenés au réacteur de craquage (41),
le fluide caloporteur étant à base de la cendre (5) du réacteur de combustion (2).

29. Dispositif selon la revendication 27 ou 28, **caractérisé en ce qu'**un catalyseur est prévu dans le réacteur de craquage (3, 41).

30. Dispositif selon la revendication 27 ou 28, **caractérisé par** un tamis (14) pour le tamisage ou un autre dispositif de séparation pour la séparation d'une fraction fine (16) des matières organiques (4) (fig. 2).

31. Dispositif selon l'une des revendications 27 à 30, **caractérisé par** une turbine à gaz (23) pour l'exploitation énergétique du gaz de synthèse (17) provenant du réacteur de craquage (3, 41).

32. Dispositif selon la revendication 31, **caractérisé par** une injection (35) pour le refroidissement et/ou le nettoyage du gaz de synthèse (9).

33. Dispositif selon la revendication 32, **caractérisé par** un sécheur (37) pour le refroidissement et/ou le nettoyage de l'eau usée (36) provenant de l'injection (35).

34. Dispositif selon l'une des revendications 27 à 33, **caractérisé par** une séparation d'hydrogène (25) pour la séparation de l'hydrogène (27) du gaz de synthèse (26) provenant du réacteur de craquage (3, 41).

35. Dispositif selon l'une des revendications 27 à 34, **caractérisé en ce que** le réacteur de combustion (2) peut fonctionner sur deux étages.

36. Dispositif selon l'une des revendications 27 à 35, **caractérisé en ce que** le réacteur de pyrolyse (1) ou le réacteur à cuve et le réacteur de craquage (3) sont conçus sous forme d'un composant, de préférence sous forme de réacteur de craquage / pyrolyse (30, 30').

37. Dispositif selon l'une des revendications 27 à 36, **caractérisé par** un autre réacteur (32) avec une charge de catalyseur.

38. Dispositif selon la revendication 37, **caractérisé par** un autre second réacteur (33) avec une charge de catalyseur.
